Europäisches Patentamt

European Patent Office

Office européen des brevets

(11) Publication number: 0 243 033
A1

# (12) EUROPEAN PATENT APPLICATION

(21) Application number: 87303025.8

(22) Date of filing: 07.04.87

(51) Int. Cl.³: H 04 B 3/23

(30) Priority: 22.04.86 US 854647

(43) Date of publication of application:
28.10.87 Bulletin 87/44

(84) Designated Contracting States:
AT DE FR GB IT NL SE

(71) Applicant: NORTHERN TELECOM LIMITED
600 de la Gauchetiere Street West
Montreal Quebec H3B 4N7(CA)

(72) Inventor: Koohgoli, Mahshad
34 Priam Way
Nepean Ontario K2H 8S8(CA)

(74) Representative: Crawford, Andrew Birkby et al,
A.A. THORNTON & CO. Northumberland House 303-306
High Holborn
London WC1V 7LE(GB)

(54) Oversampling echo canceller.

(57) An echo canceller, for a digital transmission system using oversampled signals, comprises a memory (20; 22) for storing a plurality of digital words, each comprising an estimate of the echo corresponding to a unique address word. Each address word comprises a sequence of the input binary signal plus a number of bits representing the temporal position of each bit of said sequence in the corresponding bit period. The echo cancellor also comprises a digital-to-analogue converter (68), means (70) for subtracting the echo estimate from the input binary signal, and means (74; 76) for updating the contents of the memory (20; 22).

FIG. 1

EP 0 243 033 A1

# OVERSAMPLING ECHO CANCELLER

The invention relates to echo cancellers and is especially, but not exclusively, related to echo cancellers for digital transmission systems, such as the telephone network, using oversampled signals.

To satisfy the demand for new services in the telephone network, digital data must be transmitted over the usual two wire subscriber loops. Indeed, the specifications for the Integrated Services Digital Network (ISDN) require a minimum digital transmission rate of 144 kB/second on the subscriber loop. This rate is increased to about 160 kB/second by signalling, framing and other such overhead requirements. Of the various transmission techniques available, for example frequency division multiplexing (FDM), time compression multiplexing (TCM or "ping pong") and hybrid-plus-echo canceller (ECH), the hybrid-plus-echo canceller technique is preferred because it offers the greatest range.

In the hybrid-plus-echo canceller system signals are sent in opposite directions simultaneously and occupy the same frequency band. The echo canceller is required because the incoming FAR END signal would be corrupted by echoes of the outgoing data signal (NEAR END). Such echoes are due to leakage across the hybrid itself and reflections at discontinuities in the loop, for example gauge changes and bridged taps. The echo canceller reduces echoes by deriving, from the outgoing signal, an estimate of the echo signal and subtracting it from the incoming FAR END signal. If the estimate is accurate, the

1

echo signal is subtracted out and only the actual FAR END signal remains. Such adaptive echo cancellers exploit the fact that the echo is a function of the signal sent out i.e. there is correlation between them.

In practice, there is a finite number (N) of preceding bits which contribute to the echo at any instant. The effect of earlier bits is negligible. Thus, the length of the echo is said to be N bits. As an example, the echo length for a 160 kB/second ISDN signal is deemed, for practical purposes, to be from 8 to 16 bits.

In order to produce the echo estimate, the echo canceller must be supplied with information about the outgoing signal waveform for the preceding N bit period. One known kind of echo canceller, the transversal filter kind, does this by feeding the signal through a delay line and multiplying the delayed elements by adaptive coefficients. The multiples so produced are summated to give the estimated echo signal for subtraction from the FAR END signal. The coefficients are adapted progressively until the echo is eliminated. Unfortunately this kind of echo canceller is not entirely satisfactory for cancelling "long" echoes, especially of signals coded under, for example, the AMI (Automatic Mark Inversion) format. Because it has to compute an echo estimate in each and every sample instant, the conventional transversal filter echo canceller would generally be complex and require high speed components, and hence not be satisfactory for practical application to such signals. In addition, it is limited to use with linear echo paths.

A recent kind of echo canceller, the "memory" kind, is often preferred because it requires low speed hardware - since only one

2

memory READ/WRITE and one addition are performed in sample time - and it can perform non-linear echo cancellation. Such a memory type of echo canceller is disclosed by Messrs. Holte and Stufflotten in an article entitled "A New Digital Echo Canceller for Two-Wire Subscriber Lines", IEEE Trans. on Comm. Vol. 29, No. 11, Nov. 1981. They disclose a large digital memory used to hold echo estimates for all possible combinations of the N bits of the outgoing binary signal waveform. The memory is addressed by the N bit word derived from the immediately preceding period of the outgoing waveform, the outgoing signal "history". The echo estimate corresponding to this word is read out of the memory, converted to an analogue signal by a D-to-A converter and subtracted from the incoming (RECEIVED) signal. Each echo estimate in the memory is updated by incrementing/decrementing the estimate in a direction opposite to the sign of the estimation error i.e. such that the error is reduced.

A disadvantage of classical memory-type echo cancellers is that they require large memories. For an AMI signal, each outgoing data bit can take values of +1, 0 or -1 and therefore requires 2 bits for identifying its value. For a 12 bit period echo canceller, sampled twice per bit, twenty-four outgoing samples, or forty-eight bits, are required to represent the history and therefore address the memory. The corresponding size of memory required, therefore, is 2**48 words, which is impractical. Accordingly such classical memory echo cancellers have limited use, restricted, say, to two-level transmission and to echo length less than eight bits.

Another disadvantage of the classical memory echo canceller is its long convergence time - typically measured in seconds. This is

3

because each location of the memory must be accessed many times (depending on the initial value of each echo estimate) for convergence to the true estimate.

The problem is further exacerbated when the signal is oversampled. For example, a three-bit "history" word or input signal sequence, used to address the memory, oversampled at a rate of four sample bits per bit period of the input binary signal, would use a total of twelve bits in the same time frame. This would entail the use of four shift registers, each three bits long, and a memory capacity of 2**12 bits.

## Summary of the Invention

In order to reduce this requirement, the present invention comprises an echo canceller, for a digital transmission system having a plurality of sample bits per bit of the input binary signal, comprising:

a memory for storing a plurality of digital words, each comprising an estimate of the echo corresponding to a unique address word;

address means for addressing said memory with a plurality of said unique address words, each comprising at least a part of a sequence of said input binary signal and a number of bits representing the temporal position of each sample bit in the corresponding bit period of said sequence.

The echo canceller will also comprise D/A converter means, subtractor means, and updating means for subtracting the analogue echo estimate from the input signal and updating the memory contents in dependence upon the residual or error.

4

The address means may further comprise means, in the form of a bistable or flip-flop for generating the oversampling position-indicating bits in response to a clock signal.

In the preferred embodiment, the input binary signal is oversampled at a rate of four bits per period and the address means provides two position-indication bits.

In this specification, the term "bit period" is used to refer to the period of the information bits being transmitted rather than to the period of the more frequent sampling bits.

The echo canceller may also comprise a split memory, said memory comprising a part only of said split-memory, and addressed by a corresponding part only of said sequence of the input signal. Summing means may also be provided, conveniently between the memory sections and the D/A converter, for summing the outputs of the memory sections.

Brief Description of the Drawings

An embodiment of the invention will now be described, by way of example only, with reference to the accompanying drawings, in which:-

Figure 1 is a schematic diagram of an echo canceller;

Figure 2, comprising parts a and b, shows an AMI encoder and its associated waveforms;

Figure 3, comprising parts a and b, is a schematic diagram of an AMI state generator, comprising a part of the echo canceller, and its operating waveforms;

Figure 4 is a waveform diagram for the echo canceller itself;

5

Figure 5, comprising parts a, b, and c, illustrates a conventional way of memory addressing in oversampled memory echo cancellers;

Figure 6 illustrates the addressing of an oversampled echo canceller according to the invention; and

Figure 7 is a waveform diagram for the time position bit generator of the echo canceller.

Detailed Description of a Preferred Embodiment

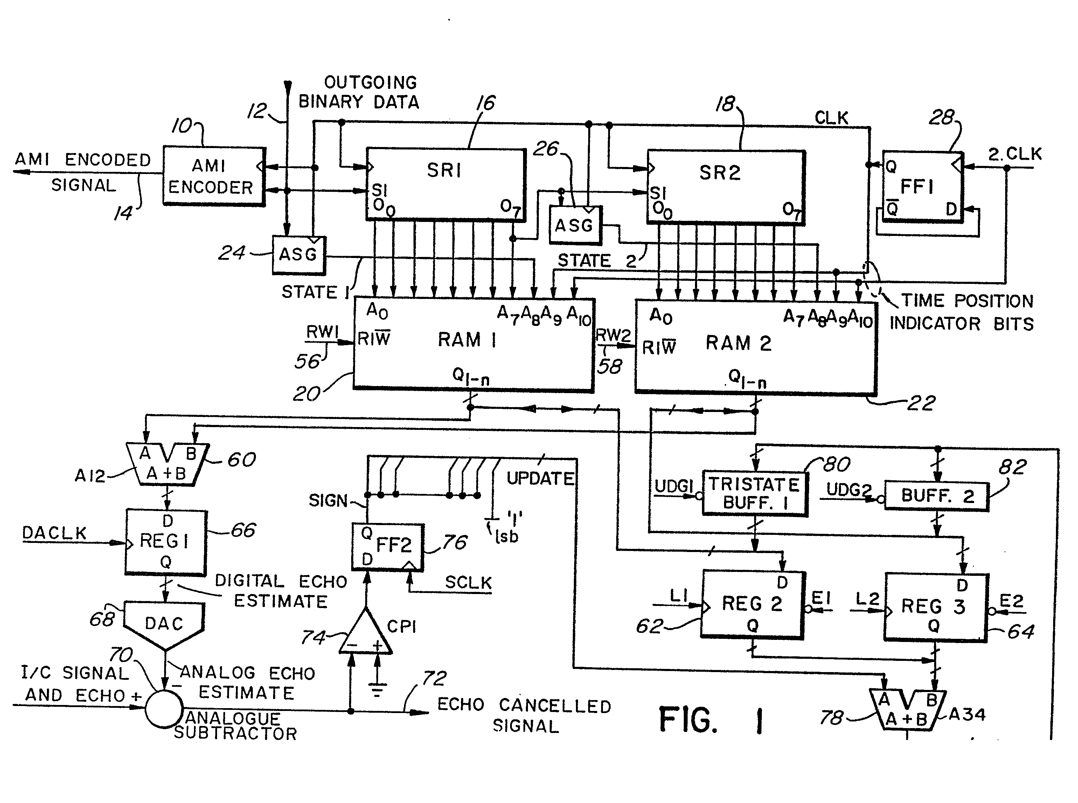

Referring now to Figure 1, a split-memory echo canceller is shown connected to an AMI-encoder 10 which takes binary data from an outgoing binary data line 12 and codes it using alternate mark inversion (AMI) coding and applies it to the outgoing transmission line 14. The data line 12 constitutes an input to the echo canceller, in particular to a serial-to-parallel converter in the form of shift register 16 which is connected in series with a second serial-to-parallel converter in the form of second shift register 18. Generally, in telephony, and hence in this specification, the path going to the subscriber is termed the receive path and the path from the subscriber to the exchange termed the transmit path, since the subscriber end of the transmission line 14 constitutes the reference point.

The echo canceller shown in Figure 1 is for cancelling up to 16 bit periods of outgoing data echo and operating with 4 samples per bit period. Consequently, the shift registers 16 and 18 each comprise 8 stages, the outputs of which are connected to the split memory, sections of which comprise random access memories (RAMS) 20 and 22, respectively. In effect, the shift registers 16 and 18 convert the

6

serial binary data to parallel data for addressing the RAMS 20 and 22, respectively.

Each of the RAMS 20 and 22 comprises a 2K x 8 memory chip, for example the type HM6116 by Hitachi. RAM 20 is addressed by the most recent 8 bits of the outgoing binary (un-encoded) data stored by the shift register 16. RAM or memory section 22 is addressed by the next most recent 8 bits of the outgoing data stored in shift register 18. In addition, the RAMS 20 and 22 are addressed by single state bits from AMI state generators 24 and 26, respectively. The final two address inputs of RAMS 20 and 22 are addressed by the two time position indicators (comprising signals 2CLK and CLK) from the time position bit generator 28.

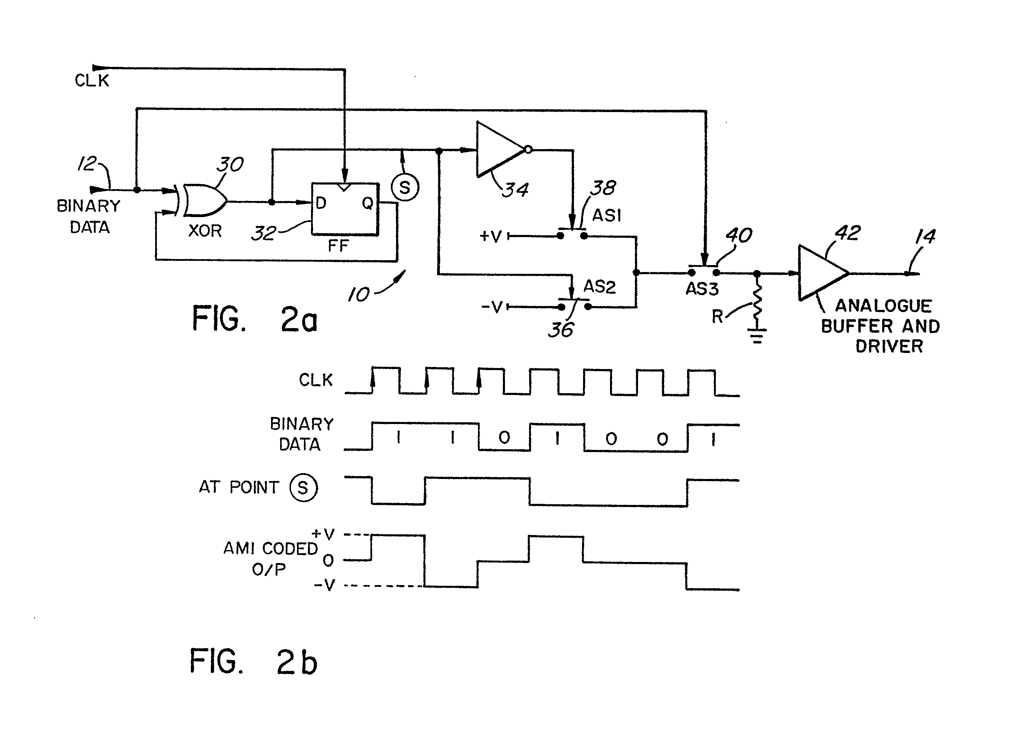

The AMI-encoder 10, (Figure 2(a)), comprises an exclusive-OR gate 30 with one input connected to receive the binary data on line 12 and its other input connected to the Q output of a flip-flop 32. The D input of the flip-flop 32 is connected to the output of the exclusive-OR gate 30 and to the input of an inverting amplifier 34. The input and output of the amplifier 34 serve to control switches 36 and 38, respectively. The switches 36 and 38 are connected in parallel between supply rails -V and +V, respectively and a third switch 40. The latter is controlled by the binary data signal from line 12 and is connected to the input of an analogue buffer and driver 42. The output of the analogue buffer and driver 42 is connected to line 14.

The waveforms for the AMI-encoder 10, shown in Figure 2(b), include the clock CLK for flip-flop 32, the binary data signal, the signal at point $\underline{s}$ i.e., the output of the exclusive-OR gate 30, and

7

the AMI-encoded output.

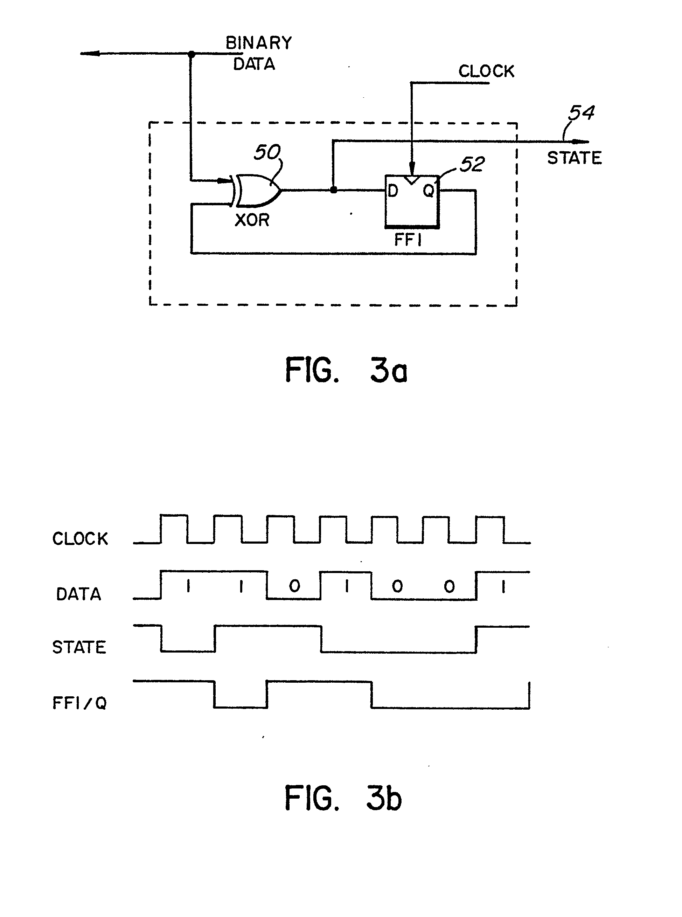

The AMI state bit generator 24 is shown in more detail in Figure 3(a) and comprises an exclusive-OR gate 50 having its input connected to the binary data line and its output connected to the D input of a flip-flop 52. The Q output of flip-flop 52 is connected to the second input of the exclusive-OR gate and the state bit output for the corresponding RAM 20 or 22 is taken from the output of the exclusive-OR gate.

The waveforms applied to and generated by the AMI state generator are shown in Figure 3(b) and comprise the clock, data, state bit and Q output of the flip-flop 52.

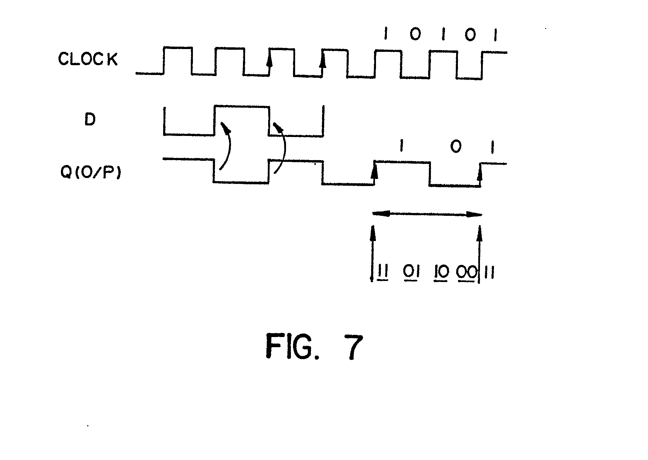

The waveforms applied to and generated by the time position bit generator, in the form of flip-flop 28, are shown in Figure 7. A clock signal 2CLK is applied to the flip-flop 28 and also applied to the most significant of the associated 2 addresses of the RAMS 20 and 22, respectively. The clock signal CLK from the Q output of the divide-by-2 flip-flop is applied to the shift registers 16 and 18 and also to the next most significant address port of each of the RAMS 20 and 22.

Considering the echo canceller as a whole again, in operation, and as illustrated in timing diagram Figure 3, four echo canceller cycles, each comprising four sections, are repeated in each bit period of the binary data signal. Here "bit period" refers to the period of the binary data signal.

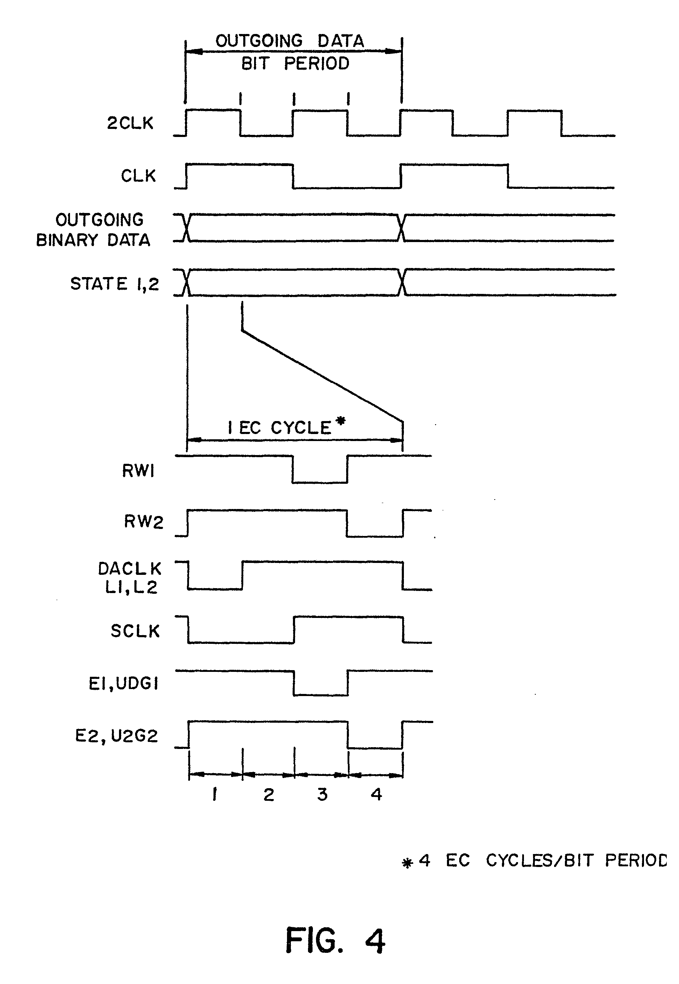

In the first section of the cycle, both memory sections i.e. RAMS 20 and 22, are addressed by the outgoing data histories from shift registers 16 and 18, the state bits from the AMI state bit generators 24 and 26, and the sample time position indicator bits from flip-flop 28. With both RAMS in the READ mode, (signals applied to READ inputs 56 and 58 of RAMS 20 and 22 respectively), the partial echo estimate is read out from each memory. These partial estimates are added together by a summer 60 and also stored in registers 62 and 64 respectively, each of which is an 8 bit register. Such storage takes place on the rising edges of the control signals L1, L2 shown in Figure 4.

In the second section of the cycle the result of the addition by summer 60, comprising the total echo estimate signal is transferred to register 66. This occurs on the rising edge of the DACLK control line (see Figure 4). This total echo estimate signal is then applied by the register 66 to a digital-to-analogue converter 68. At the conclusion of this cycle a subtracter 70 subtracts the total analogue echo estimate (from the output of the digital-to-analogue converter) from the incoming signal, which comprises FAR END signal and echo. The residual signal is supplied as an output from the echo canceller on line 72 to a data recovery circuit (not shown) and also is applied to a comparator 74. The comparator 74 serves to determine the sign of the residual signal and store it in a flip-flop 76 on the rising edge of control signal SCLK (see Figure 4). This sign signal is used to determine whether the correction applied to the RAMS 20 and 22 should be up or down. The actual increment or decrement each time is a single bit. A greater number may be used, if faster convergence is preferred.

As mentioned previously the output from the RAMS 20 and 22 was applied to registers 62 and 64, respectively. At the beginning of

9

the third section of the cycle the sign bit and contents of register 62 are applied to adder 78. The incremented or decremented output of the adder 78 is applied to a tristate buffer 80. The tristate buffer 80 writes the new memory word comprising the output of summer 78 into RAM 20. More specifically, the READ/WRITE signal for RAM 20 is held low for a WRITE operation and the tristate buffer 80 is enabled by bringing the control signal UDG1 (see Figure 1) to a low level.

In the fourth section of the cycle, a similar procedure is used to update the second memory section comprising RAM 22. In this case the old partial echo estimate is enabled from register 64 updated by adding or subtracting the sign bit and the revised or new partial echo estimate applied by means of tristate buffer 82 to RAM 22.

The same sequence of operations is repeated during the next echo canceller cycle.

So far as the reduction attributable to the AMI state bit is concerned, it should be appreciated that the contents of the memory sections, RAMS 20 and 22, will comprise individual unique words as the partial echo estimates, but that, for a given pattern of 8 bits and a given pair of time position bits, there will be two possible partial echo estimates from which to choose. The choice will be dependent upon the state of the AMI state generator bit applied to input A8 (as shown in Figure 1). Although the memory size is doubled by virtue of doubling the number of words for each particular sequence, the total saving is a factor of $2^{M-1}$ due to the reduction of the number of address bits from 2M to M+1, where $\underline{M}$ is the number of history bits of the binary data signal.

It should also be appreciated that the invention is not limited to AMI code but could be applied to other line codes.

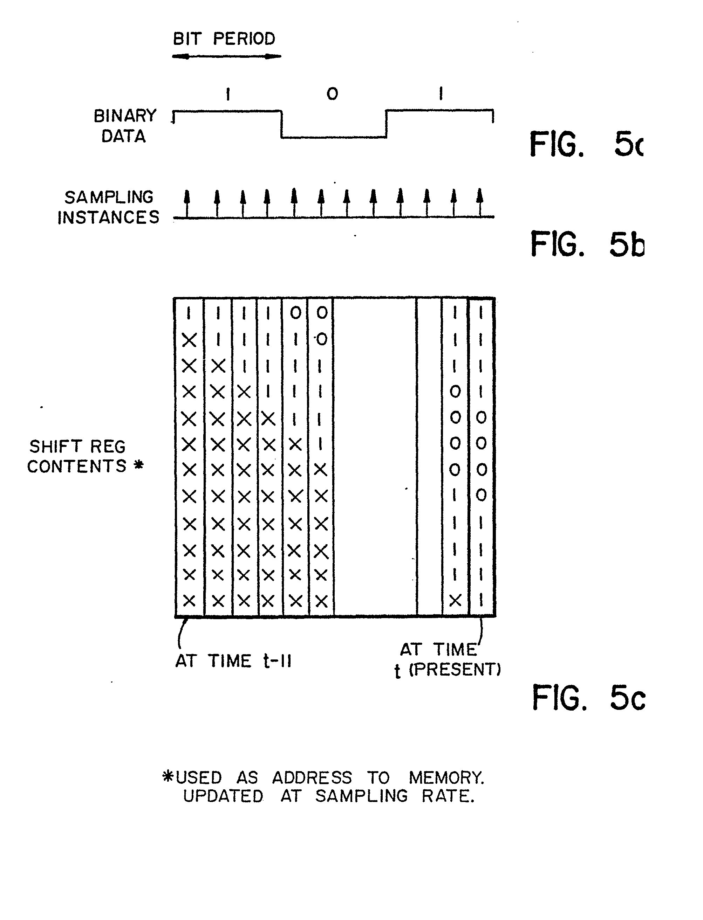

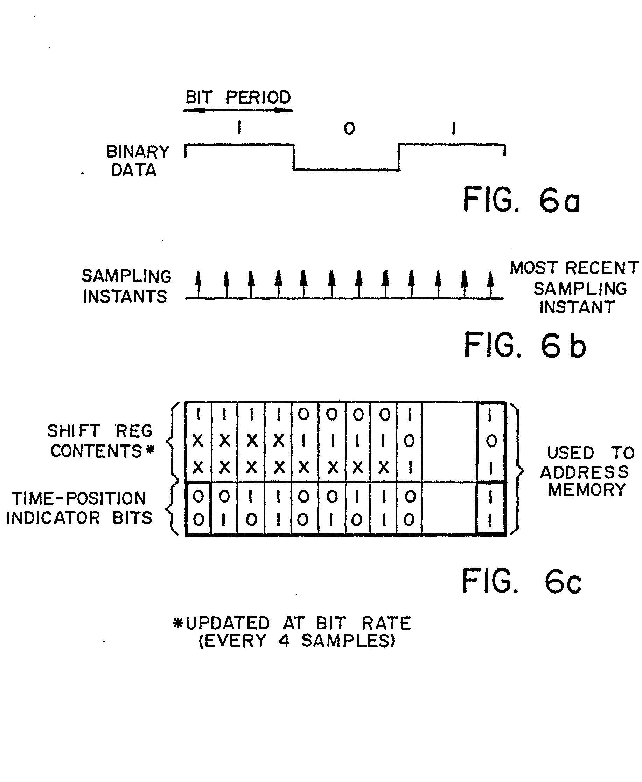

The improvement or reduction in memory attributable to the use of the time position indicator means can be seen by referring to Figures 5 and 6. In both Figures, the binary data signal, shown here as 101, is sampled at four samplings per bit period as shown in Figure 5(b). The conventional arrangement shown in Figure 5 shows that the contents of the shift register (16 or 18) change sequentially as the data is clocked into it. Eventually the shift register contains the 12 bits 111100001111 which are used to address the memory. Every shift register word will have a corresponding memory word.

As illustrated in Figure 6, however the echo canceller embodying the present invention uses the time position bits to encode the corresponding position in the bit period of each individual sample. Thus, in the particular example of four samples per bit period, only 2 bits are needed to designate the sample period or sampling instant. The table shown as Figure 5(c) shows the contents of the shift register, in this case, shown as having only 3 bits content rather than the 8 bits content of the actual embodiment. At any sampling instant, the shift register contents comprise the actual bit of the data signal plus two time position indicator bits. These show to which sampling instant the signal applies. Thus, in Figure 5(c) during the first four positions the shift register contents comprise the same 1 bit but the time position indicator bits change as they cycle through the four possible combinations 00, 01, 10, and 11. Each address word has a unique partial echo estimate corresponding to it in the corresponding one of RAMS 20 and 22. Thus, although the binary word part of the shift register contents might remain the same

11

for 4 bit periods, there will in effect be four distinct address words as the time position indicator bits change.

It will be appreciated that other numbers of time position indicator bits might be used to accommodate different sampling rates.

CLAIMS:

1. An echo canceller for a digital transmission system having a plurality of sampling bits for each bit period of the input binary signal, said echo canceller comprising:-

a memory (20; 22) for storing a plurality of digital words each corresponding to an estimate of the echo corresponding to a unique address word;

address means (16; 18) for addressing said memory (20; 22) with a plurality of said unique address words, each comprising a sequence of said input binary signal and a number of bits representing the temporal position of the sample bit in the corresponding bit period of said input binary signal;

digital-to-analogue conversion means (68) for converting said digital words output from the memory (20; 22) into respective echo signal estimates;

subtractor means (70) for subtracting each echo signal estimate from the input binary signal; and

memory updating means (74; 76) responsive to the output of said subtractor means (70) for increasing or decreasing the value of the corresponding said digital word in said memory (20; 22).

2. An echo canceller as defined in claim 1, including means (28) responsive to a clock signal for generating said number of bits representing temporal position.

13

3.  An echo canceller as defined in claim 1, wherein said memory comprises at least two parts (20; 22), each addressed separately by an address word comprising a part only of said sequence of the input signal, said echo canceller further comprising summing means (60) for summing the outputs of the memory parts (20; 22).

4.  An echo canceller as defined in claim 2, wherein said memory comprises at least two parts (20; 22), each addressed separately by an address word comprising a part only of said sequence of the input signal, said echo canceller further comprising summing means (60) for summing the outputs of the memory parts (20; 22).

14

FIG. 1

024303

FIG. 2a

FIG. 2b

024303

FIG. 3a

FIG. 3b

FIG. 4

BIT PERIOD

BINARY DATA

I    O    I

FIG. 5c

SAMPLING INSTANCES

FIG. 5b

SHIFT REG CONTENTS *

AT TIME t-11

AT TIME t (PRESENT)

FIG. 5c

*USED AS ADDRESS TO MEMORY. UPDATED AT SAMPLING RATE.

0243033

BIT PERIOD

| I | O | I |

BINARY DATA

## FIG. 6a

SAMPLING INSTANTS ↑ ↑ ↑ ↑ ↑ ↑ ↑ ↑ ↑ ↑ ↑ MOST RECENT SAMPLING INSTANT

## FIG. 6b

SHIFT REG CONTENTS*

| I | I | I | I | O | O | O | O | I | | I |
|---|---|---|---|---|---|---|---|---|---|---|
| X | X | X | X | I | I | I | I | O | | O |
| X | X | X | X | X | X | X | X | I | | I |

TIME-POSITION INDICATOR BITS

| O | O | I | I | O | O | I | I | O | | I |
|---|---|---|---|---|---|---|---|---|---|---|
| O | I | O | I | O | I | O | I | O | | I |

USED TO ADDRESS MEMORY

## FIG. 6c

*UPDATED AT BIT RATE (EVERY 4 SAMPLES)

FIG. 7

0243033

European Patent
Office

**EUROPEAN SEARCH REPORT**

Application number

EP  87 30 3025

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | CA-A-1 186 764  (NEC CORP.)<br>* Page 23, line 18 - page 25, line 5; figure 4 * | 1-4 | H 04 B   3/23 |
| X | EP-A-0 098 000  (N.V. PHILIPS' GLOEILAMPENFABRIEKEN)<br>* Page 6, lines 6-22; page 10, lines 25-26 * | 1,2 | |
| X | IEEE TRANSACTIONS ON CIRCUITS AND SYSTEMS, vol. CAS-33, no. 2, February 1986, pages 175-182, IEEE, New York, US; R.P. COLBECK et al.: "A 160-kb/s digital subscriber loop transceiver with memory compensation echo canceller"<br>* Page 180, lines 7-9; figure 1 * | 1,2 | |

TECHNICAL FIELDS
SEARCHED (Int Cl 4)

H 04 B

The present search report has been drawn up for all claims

| Place of search | Date of completion of the search | Examiner |
|---|---|---|
| THE HAGUE | 29-07-1987 | SNELL T. |